## Europäisches Patentamt

## European Patent Office

## Office européen des brevets

(19)

(11) Veröffentlichungsnummer : **0 126 257**
**B1**

(12)

# EUROPÄISCHE PATENTSCHRIFT

(45) Veröffentlichungstag der Patentschrift :
18.06.86

(21) Anmeldenummer : 84103887.0

(22) Anmeldetag : 07.04.84

(51) Int. Cl.⁴ : **B 60 K 31/00**, B 60 K 26/04

(54) Einrichtung zum Begrenzen der Fahrgeschwindigkeit.

(30) Priorität : 20.05.83 DE 3318430

(43) Veröffentlichungstag der Anmeldung :
28.11.84 Patentblatt 84/48

(45) Bekanntmachung des Hinweises auf die Patenterteilung : 18.06.86 Patentblatt 86/25

(84) Benannte Vertragsstaaten :
DE FR GB IT SE

(56) Entgegenhaltungen :
EP-A- 0 043 709
DE-A- 2 200 371
GB-A-   937 629
US-A- 3 708 031
US-A- 4 140 202

(73) Patentinhaber : VDO Adolf Schindling AG
Gräfstrasse 103
D-6000 Frankfurt/Main (DE)

(72) Erfinder : Pfalzgraf, Manfred
Luisenstrasse 24
D-6000 Frankfurt/M. 1 (DE)
Erfinder : Probst, Kurt
Altkönigstrasse 19
D-6231 Schwalbach/Ts. (DE)

(74) Vertreter : Könekamp, Herbert, Dipl.-Ing. et al
Sodener Strasse 9
D-6231 Schwalbach (DE)

## Beschreibung

Die Erfindung bezieht sich auf eine Einrichtung zur Begrenzung der Fahrgeschwindigkeit bzw. der Motordrehzahl eines Kraftfahrzeuges, mit einem Sollwertgeber, einem Geschwindigkeits- bzw. Drehzahl- Istwertgeber und einem die Signale der beiden Geber verarbeitenden Steuergerät, das aus der Signaldifferenz ein Steuersignal bildet, durch das ein Stellglied betätigbar ist, das einer Übertragungsvorrichtung zugeordnet ist, die der Übertragung der Bewegung eines Gaspedals auf die Brennstoffzumeßvorrichtung dient, wobei bei Überschreitung einer am Sollwertgeber eingestellten Grenzgeschwindigkeit bzw. Grenzdrehzahl das Stellglied aus einer Normalstellung in Richtung auf eine Reduzierstellung die wirksame Länge der Übertragungsvorrichtung in Richtung auf eine Reduzierung der Brennstoffmenge änderbar bewegbar ist.

Bei derartigen Einrichtungen ist es bekannt, daß das Stellglied innerhalb der eingestellten Grenzgeschwindigkeit sowie bei nicht laufendem Motor durch eine Feder in der Normalstellung gehalten ist. Nur bei Überschreitung der Grenzgeschwindigkeit erfolgt eine Ansteuerung des Stellglieds derart, daß dieses sich in Richtung zur Reduzierstellung bewegt.

Ein weiterhin in der Übertragungsvorrichtung angeordneter pneumatischer Stoppzylinder wird bei einem Motorstopp derart druckbeaufschlagt, daß die wirksame Länge der Übertragungsvorrichtung in Richtung auf eine Reduzierung der Brennstoffmenge verändert wird.

Dieser Stoppzylinder mit seiner Druckversorgung sowie Druckansteuerung ist sowohl bauteil- als auch bauraumaufwendig, was insbesondere bei einem nur wenig Bauraum aufweisenden Kraftfahrzeug von Nachteil ist.

Aufgabe der Erfindung ist es daher, eine Einrichtung nach dem Oberbegriff zu schaffen, die mit wenigen einfachen Mitteln bei einem Motorstopp eine Reduzierung der Brennstoffmenge bewirkt.

Diese Aufgabe wird erfindungsgemäß dadurch gelöst, daß das Stellglied bei Motorinbetriebnahme in die Normalstellung und bei Motoraußerbetriebnahme in die Reduzierstellung bewegbar und außerhalb der eingestellten Grenzgeschwindigkeit in der eingenommenen Normalstellung bzw. Reduzierstellung blockierbar ist. Durch diese Ausbildung ist kein zusätzliches Bauteil wie ein Stoppzylinder mehr erforderlich, da das Stellglied neben seiner normalen Geschwindigkeits- bzw. Drehzahlbegrenzungsfunktion auch noch die Brennstoffreduzierende Stoppfunktion beim Ausschalten des Motors übernimmt. Da die Brennstoffreduzierung der Stoppfunktion so groß ist, daß es nicht zu einer Selbstzündung des Dieselmotors eines abgestellten Fahrzeuges kommen kann, wenn dieses Zum Beispiel an einem Hang abgestellt ist, und selbständig ins Rollen kommt, ergibt sich zusätzlich die dritte Funktion, einer Anrollsperre. Auch diese dritte Funktion erfolgt ohne zusätzlichen Bauteilaufwand durch das Stellglied, da dieses bei einem Motorstopp nicht nur in die Reduzierstellung bewegt, sondern dort auch während des gesamten Motorstopps gehalten wird.

Ein weiterer Vorteil der sich aus der Verknüpfung der vom Stellglied durchgeführten Begrenzungsfunktion und Stoppfunktion ergibt, liegt darin, daß bei einer Manipulation zum Ausschalten der Begrenzerfunktion gleichzeitig die Stoppfunktion ausgeschaltet wird, so daß der Motor nicht mehr ausschaltbar wäre. Die Gefahr einer unzulässigen Ausschaltung der Begrenzerfunktion ist somit erheblich gemindert.

Als einfaches Antriebsmittel für das Stellglied dient vorzugsweise ein elektrischer Antrieb, der durch einen Kontakt des Fahrtschalters ansteuerbar sein kann. Dadurch sind keine bewußt zusätzlich vom Fahrer zu bedienenden Schalter erforderlich, da durch die Betätigung des Zündschlüssels automatisch die richtige Schaltfunktion durchgeführt wird.

Das Stellglied kann entweder kraftschlüssig durch z. B. Federbeaufschlagung oder formschlüssig durch z. B. ein selbsthemmendes Getriebe zwischen Antriebsmotor und Stellglied in der Normal- und/oder Reduzierstellung blockierbar sein. Damit kann mit einfachen Bauteilen geringer Baugröße die Blockierbarkeit erreicht werden.

Eine einfache Reduzierung der wirksamen Länge der Übertragungsvorrichtung wird erreicht, wenn durch das Stellglied eine Übersetzung im wirksamen Bewegungsverlauf der Übertragungsvorrichtung veränderbar ist. Dabei ist ein nur geringer Bauraum nötig, wenn die Übersetzung eine Hebelübersetzung ist, deren Gelenk durch das Stellglied verschiebbar ist.

Das Stellglied kann in einfacher Weise dabei einen zwischen der Normalstellung und der Reduzierstellung schwenkbaren Schwenkhebel aufweisen. Ist dabei der Schwenkhebel von einer Schnappfeder in seine Normalstellung bzw. Reduzierstellung beaufschlagbar, so wird durch dieses eine einfache und billige Bauteil die Blockierbarkeit sowohl in der Normal- als auch in der Reduzierstellung erreicht.

Ein Ausführungsbeispiel der Erfindung ist in der Zeichnung dargestellt und wird im folgenden näher beschrieben. Es zeigen

Figur 1 eine erfindungsgemäße Einrichtung in der Leerlaufstellung bei Motorbetrieb

Figur 2 die Einrichtung nach Figur 1 in der Vollaststellung bei Motorbetrieb

Figur 3 die Einrichtung nach Figur 1 in der Begrenzungsstellung bei Motorbetrieb

Figur 4 ein Blockschaltbild zur Einrichtung nach Figur 1.

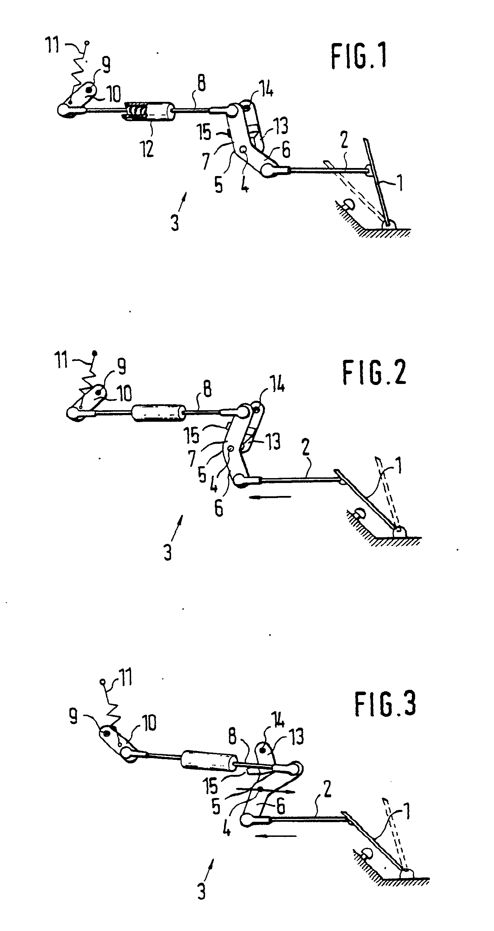

Die in den Figuren 1-3 dargestellte Einrichtung besitzt ein Gaspedal 1, an das das eine Ende einer Regulierstange 2 einer Übertragungsvorrichtung 3 etwa axial bewegbar angelenkt ist. Das andere Ende der Regulierstange 2 ist an einem Arm 6 eines zweiarmigen um eine Drehachse 4 schwenkbaren Hebel 5 angelenkt. An dem Anderen Arm 7 des Hebels 5 ist mit ihrem einen Ende eine etwa axial zur Regulierstange 2 bewegbare Begrenzerstange 8 angelenkt, deren anderes Ende mit einem um einen festen Drehpunkt 9 schwenkbaren Schwenkhebel 10 eines Stellgliedes schwenkbar ist.

Der Schwenkhebel 10 ist zwischen einer Normalstellung (Figuren 1 und 2) und einer Reduzierstellung (Figur 3) schwenkbar antreibbar und wird von einer Schnappfeder 11 entweder in die Normalstellung oder die Reduzierstellung belastet.

Die Schnappfeder 11 ist eine mit einem Ende am Schwenkhebel angreifende Zugfeder, die mit ihrem anderen Ende an einem Punkt auf der den Drehpunkt 9 schneidenden normalen zur Längserstreckung der Begrenzerstange befestigt ist. Dadurch wird bei Überschreitung des Totpunkts von der Normal- zur Reduzierstellung und umgekehrt die Beaufschlagungsrichtung gewechselt.

In der Begrenzerstange 8 ist ein durch einen Federzylinder gebildetes Überhubelement 12 angeordnet.

Die Drehachse 4 ist nicht ortsfest, sondern an dem einen Ende eines Betätigungshebels 13 angelenkt. Das andere Ende des Betätigungshebels 13 ist um die Achse einer Welle 14 schwenkbar, mit der der Betätigungshebel starr verbunden ist. Von der Schwenkbewegung der Welle 14 ist ein nicht dargestellter Einspritzpumpenhebel schwenkbar. Es kann aber auch eine Drosselklappe von der Welle 14 geschwenkt werden.

Über einen Anschlag 15 des Betätigungshebels 13, an den der Arm 7 bei Betätigung des Hebels 5 in Vollastrichtung anlegbar ist, ist der Betätigungshebel bei Bewegung des Gaspedals 1 in Vollastrichtung ebenfalls in Vollastrichtung bewegbar. Durch Verschwenken des Schwenkhebels 10 aus der Normalstellung in die Reduzierstellung wird der Hebel 5 und mit ihm seine Drehachse 4 nach rechts bewegt.

Gleichzeitig schwenkt dabei der Betätigungshebel 13 um die Achse der Welle 14 nach rechts und nimmt die Welle 14 in eine die Brennstoffmenge reduzierende Richtung mit.

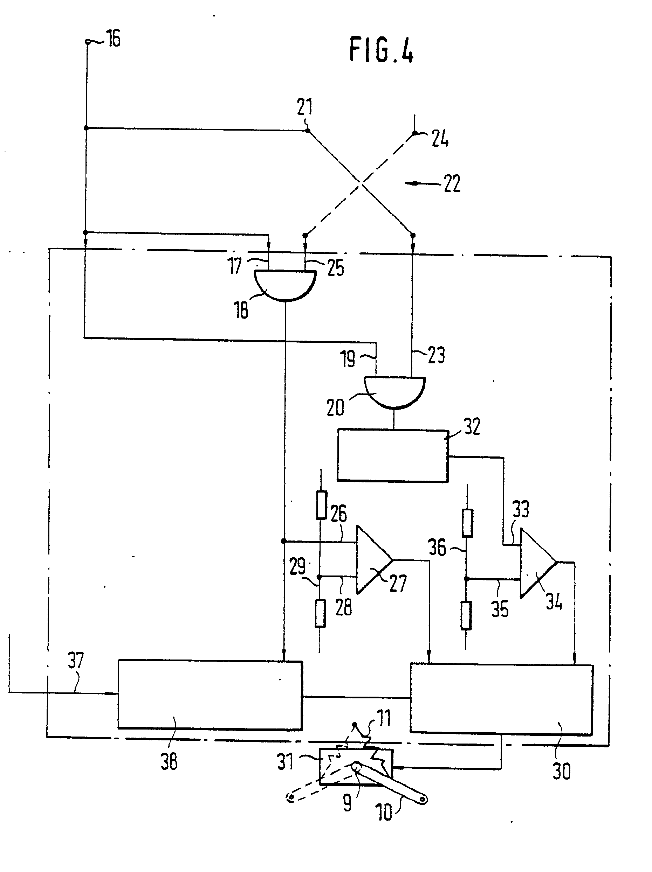

Die Ansteuerung der Bewegung des Schwenkhebels 10 ist aus Figur 4 zu erkennen. Der Pol 16 ist mit einer nicht dargestellten Spannungsquelle verbunden. Von dem Pol 16 führt eine Verbindung zu einem Eingang 17 eines ersten UND-Gliedes 18, zu einem Eingang 19 eines zweiten UND-Gliedes 20, sowie zu einem AUS-Kontakt 21 eines Fahrtschalters 22. Der Fahrtschalter 22 verbindet in seiner einen Schaltstellung den AUS-Kontakt 21 mit dem zweiten Eingang 23 des UND-Glieds 20 und in seiner anderen Schaltstellung einen EIN-Kontakt 24 mit dem zweiten Eingang 25 des UND-Gliedes 18.

Das Ausgangssignal des UND-Gliedes 18 welches angibt, daß der Fahrzeugmotor in Betrieb ist, wird sowohl einer Begrenzereinheit 38 als auch dem einen Eingang 26 eines Verstärkers 27 zugeleitet. Der zweite Eingang 28 ist mit einem Spannungsteiler 29 verbunden.

Das Ausgangssignal des Verstärkers 27 wird einer Treiberstufe 30 für den elektromotorischen Antrieb 31 des Schwenkhebels 10 zugeleitet.

Der Ausgang des UND-Glieds 20 führt zu einem Zeitglied 32, das bei Ansteuerung für eine bestimmte Zeit (z. B. 10 Sekunden) ein Ausgangssignal einem Eingang 33 eines Verstärkers 34 zuleitet. Der andere Eingang 35 des Verstärkers 34 ist mit einem Spannungsteiler 36 verbunden.

Der Ausgang des Verstärkers 34 führt zu der Treiberstufe 30.

Die Begrenzereinheit 38 erhält an einem Eingang 37 ein Geschwindigkeits- bzw. Drehzahlsignal zugeführt.

In der dargestellten Position befindet sich der Fahrtschalter 22 in seiner AUS-Stellung. Wird er in die EIN-Stellung umgeschaltet, so erhält das UND-Glied 18 an seinen beiden Eingängen 17 und 25 ein Signal, so daß es ein Ausgangssignal sowohl an die Begrenzereinheit 38 als auch über den Verstärker 27 an die Treiberstufe 30 abgibt.

Da das Geschwindigkeits- bzw. Drehzahlsignal unterhalb eines an einem nicht dargestellten Sollwertgebers der Begrenzereinheit 38 eingestellten Sollwert liegt und gleichzeitig die Begrenzereinheit 38 ein EIN-Signal erhält, steuert sie die Treiberstufe 30 in Normalstellung an, so daß der Schwenkhebel 10 aus seiner mit durchgezogener Linie dargestellten Reduzierstellung in seine mit unterbrochener Linie gezeichneten Normalstellung schwenkt und dort durch die Schnappfeder 11 gehalten wird.

Überschreitet nun das Geschwindigkeits- bzw. Drehzahlsignal den der Begrenzereinheit 38 eingestellten Sollwert, so steuert diese die Treiberstufe 30 derart an, daß der Schwenkhebel 10 um ein entsprechendes Maß in Richtung zur Reduzierstellung geschwenkt wird. Dabei wird die Kraft der Schnappfeder 11 überwunden. Erfolgt nach einem Fahrbetrieb ein Umschalten des Fahrtschalters 22 aus der EIN-Stellung in die AUS-Stellung, so gibt nun das UND-Glied 18 kein Signal mehr an die Begrenzereinheit 38 ab. Damit ist diese unwirksam geschaltet.

Dafür erhält jetzt das UND-Glied 20 an beiden Eingängen 19 und 23 ein Signal, so daß das Zeitglied 32 ein Eingangssignal zugeleitet bekommt. Für die an dem Zeitglied 32 eingestellte Zeitspanne gibt das Zeitglied 32 über den Verstärker 34 ein Signal an die Treiberstufe 30, durch welches diese in die Reduzierstellung angesteuert wird und den Schwenkhebel 10 in diese Stellung bewegt.

Die Zeitspanne des Zeitgliedes 32 ist so bemessen, daß der Schwenkhebel 10 mit Sicherheit bis in seine Reduzierstellung fährt. Dort wird er dann durch die Schnappfeder 11 gehalten.

Die an den zweiten Eingängen 29 und 35 der Verstärker 27 und 37 anliegenden Spannungsteiler 29 und 36 dienen als Sicherungselemente damit nicht Störsignale eine Ansteuerung der Treiberstufe auslösen können.

## Patentansprüche

1. Einrichtung zum Begrenzen der Fahrgeschwindigkeit bzw. der Motordrehzahl eines Kraftfahrzeuges, mit einem Sollwertgeber, einem Geschwindigkeits- bzw. Drehzahl-Istwertgeber und einem die Signale der beiden Geber verarbeitenden Steuergerät, das aus der Signal differenz ein Steuersignal bildet, durch das ein Stellglied betätigbar ist, das einer Übertragungsvorrichtung (3) zugeordnet ist, die der Übertragung der Bewegung eines Gaspedals (1) auf die Brennstoffzumeßvorrichtung dient, wobei bei Überschreitung einer am Sollwertgeber eingestellten Grenzgeschwindigkeit bzw. einer Grenzdrehzahl das Stellglied aus einer Normalstellung in Richtung auf eine Reduzierstellung die wirksame Länge der Übertragungsvorrichtung in Richtung auf eine Reduzierung der Brennstoffmenge änderbar bewegbar ist, dadurch gekennzeichnet, daß das Stellglied bei Motorinbetriebnahme in die Normalstellung und bei Motoraußerbetriebnahme in die Reduzierstellung bewegbar und unterhalb der eingestellten Grenzgeschwindigkeit bzw. Grenzdrehzahl in der eingenommenen Normalstellung bzw. Reduzierstellung blockierbar ist.

2. Einrichtung nach Anspruch 1, dadurch gekennzeichnet, daß das Stellglied durch einen elektromotorischen Antrieb (31) bewegbar ist.

3. Einrichtung nach einem der vorhergehenden Ansprüche, dadurch gekennzeichnet, daß der Antrieb (31) von einem Kontakt des Fahrtschalters (22) ansteuerbar ist.

4. Einrichtung nach einem der vorhergehenden Ansprüche, dadurch gekennzeichnet, daß das Stellglied kraftschlüssig in der Normal- und/oder Reduzierstellung blockierbar ist.

5. Einrichtung nach einem der Ansprüche 1 bis 3, dadurch gekennzeichnet, daß das Stellglied formschlüssig in der Normal- und/oder Reduzierstellung blockierbar ist.

6. Einrichtung nach einem der vorhergehenden Ansprüche, dadurch gekennzeichnet, daß durch das Stellglied eine Übersetzung im wirksamen Bewegungsverlauf der Übertragungsvorrichtung (3) veränderbar ist.

7. Einrichtung nach Anspruch 6, dadurch gekennzeichnet, daß die Übersetzung eine Hebelübersetzung ist, deren Gelenk durch das Stellglied verschiebbar ist.

8. Einrichtung nach Anspruch 7, dadurch gekennzeichnet, daß das Stellglied einen zwischen der Normalstellung und der Reduzierstellung schwenkbaren Schwenkhebel (10) aufweist.

9. Einrichtung nach Anspruch 8, dadurch gekennzeichnet, daß der Schwenkhebel (10) von einer Schnappfeder (11) in seine Normalstellung bzw. Reduzierstellung beaufschlagbar ist.

## Claims

1. Apparatus for limiting the speed of travel or engine speed of a motor vehicle, with a desired-value signal emitter, a travel speed or engine speed actual-value signal emitter, and a control unit which processes the signals of the two emitters and which forms from the signal difference a control signal whereby a regulating element is operatable which is associated with a transmission device (3) serving for transmitting the movement of an accelerator pedal (1) to the fuel proportioning device, wherein, when a critical travel speed or critical engine speed set at the desired-value signal emitter is exceeded, the regulating element is adapted to move out of a normal position in the direction towards a reducing position in such a manner as to permit varying the effective length of the transmission device in the sense of reducing the fuel quantity, characterised in that the regulating element is movable into the normal position when the engine is brought into operation and into the reducing position when the engine is rendered inoperative, and below the set threshold or critical travel speed or engine speed is lockable in the adopted normal or reducing position.

2. Apparatus according to claim 1, characterised in that the regulating element is movable by an electric motor drive (31).

3. Apparatus according to one of the preceding claims, characterised in that the drive (31) is operatable by a contact of the driving switch (22).

4. Apparatus according to one of the preceding claims, characterised in that the regulating element is lockable in force-locking manner in the normal and/or reducing position.

5. Apparatus according to one of claims 1 to 3, characterised in that the regulating element is lockable in shape-locking manner in the normal and/or reducing position.

6. Apparatus according to one of the preceding claims, characterised in that the regulating element can vary a transmission in the effective line of movement of the transmission device (3).

7. Apparatus according to claim 6, characterised in that the transmission is a lever transmission the pivot of which is displaceable by the regulating element.

8. Apparatus according to claim 7, characterised in that the regulating element comprises a rocking lever (10) adapted to move pivotably between the normal position and the reducing position.

9. Apparatus according to claim 8, characterised in that the rocking lever (10) is adapted to be urged by a snap spring (11) into its normal position or reducing position.

## Revendications

1. Dispositif pour limiter respectivement la vitesse de déplacement ou la vitesse angulaire du moteur d'un véhicule automobile, comprenant un indicateur de valeurs de consigne, un indicateur de valeurs réelles correspondant respectivement à la vitesse ou à la vitesse angulaire, ainsi qu'un appareil de commande qui traite les signaux des deux indicateurs et forme, à partir de la différence entre ces signaux, un signal de commande par l'intermédiaire duquel peut être actionné un organe de manœuvre associé à un dispositif de transmission (3) qui sert à répercuter le mouvement d'une pédale d'accélération (1) au dispositif doseur de carburant, dispositif dans lequel, lors du dépassement respectif d'une vitesse limite ou d'une vitesse angulaire limite réglée sur l'indicateur de valeurs de consigne, l'organe de manœuvre peut être déplacé d'une position normale vers une position réductrice, en pouvant faire varier la longueur efficace du dispositif de transmission dans le sens d'une réduction de la quantité de carburant, dispositif caractérisé par le fait que l'organe de manœuvre peut être mû à la position normale lorsque le moteur est mis en fonction et à la position réductrice lorsque ce moteur est mis hors fonction, en pouvant être bloqué dans la position respectivement normale ou réductrice qu'il a prise, en deçà de la vitesse limite ou de la vitesse angulaire respectivement réglée.

2. Dispositif selon la revendication 1, caractérisé par le fait que l'organe de manœuvre peut être mû par un entraînement électromotorisé (31).

3. Dispositif selon l'une quelconque des revendications précédentes, caractérisé par le fait que l'entraînement (31) peut être commandé par un contact du commutateur de marche (22).

4. Dispositif selon l'une quelconque des revendications précédentes, caractérisé par le fait que l'organe de manœuvre peut être bloqué mécaniquement dans la position normale et/ou la position réductrice.

5. Dispositif selon l'une quelconque des revendications 1 à 3, caractérisé par le fait que l'organe de manœuvre peut être bloqué dans la position normale et/ou dans la position réductrice par concordance de formes.

6. Dispositif selon l'une quelconque des revendications précédentes, caractérisé par le fait qu'une démultiplication intervenant dans la course efficace du dispositif de transmission (3) peut être modifiée par l'intermédiaire de l'organe de manœuvre.

7. Dispositif selon la revendication 6, caractérisé par le fait que la démultiplication consiste en une démultiplication par levier, dont l'articulation peut être déplacée par l'organe de manœuvre.

8. Dispositif selon la revendication 7, caractérisé par le fait que l'organe de manœuvre présente un levier pivotant (10) pouvant pivoter entre la position normale et la position réductrice.

9. Dispositif selon la revendication 8, caractérisé par le fait que le levier pivotant (10) peut être chargé par un ressort d'encliquetage (11) à sa position respectivement normale ou réductrice.

**FIG.1**

**FIG.2**

**FIG.3**

FIG.4